(19) **Europäisches Patentamt European Patent Office Office européen des brevets**

(11) **EP 4 716 119 A1**

(12) **EUROPEAN PATENT APPLICATION**
published in accordance with Art. 153(4) EPC

(43) Date of publication:
25.03.2026 Bulletin 2026/13

(21) Application number: 23941006.1

(22) Date of filing: 13.06.2023

(51) International Patent Classification (IPC):
*H04J 13/10* (2011.01)

(52) Cooperative Patent Classification (CPC):
H04J 13/10

(86) International application number:
PCT/CN2023/100036

(87) International publication number:
WO 2024/254768 (19.12.2024 Gazette 2024/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Huawei Technologies Co., Ltd.
Shenzhen, Guangdong 518129 (CN)

(72) Inventors:
• WANG, Fan
  Shenzhen, Guangdong 518129 (CN)
• FENG, Qi
  Shenzhen, Guangdong 518129 (CN)
• TONG, Wen
  Shenzhen, Guangdong 518129 (CN)

(74) Representative: MERH-IP Matias Erny Reichl
Hoffmann
Patentanwälte PartG mbB
Paul-Heyse-Straße 29
80336 München (DE)

(54) **COMMUNICATION METHOD AND APPARATUS**

(57) A communication method and apparatus are disclosed. The method includes: A first apparatus generates a cubic polynomial exponential sequence, where a cubic term coefficient of the cubic polynomial exponential sequence is associated with a quadratic term coefficient of the cubic polynomial exponential sequence; and the first apparatus outputs the cubic polynomial exponential sequence. Compared with existing communication sequences, a sequence capacity of the cubic polynomial exponential sequence is positively correlated with a cube of a sequence length of the cubic polynomial exponential sequence, the cubic polynomial exponential sequence can resist a Doppler shift with more subcarrier spacings, and a product of a maximum round-trip delay and a maximum Doppler shift is not constrained by the sequence length.

First apparatus

Second apparatus

S201: The first apparatus generates a cubic polynomial exponential sequence

S202: The first apparatus outputs the cubic polynomial exponential sequence generated in S201

FIG. 2

**Description**

**TECHNICAL FIELD**

This application relates to the communication field, and more specifically, to a communication method and apparatus.

**BACKGROUND**

In a communication system, frequently-used communication sequences include an Alltop sequence, a Zadoff-Chu sequence (ZC sequence for short), and a Zadoff-Chu Cover Alltop sequence. However, these communication sequences all have some disadvantages.

For the Alltop sequence, an ambiguity function of the Alltop sequence has a plurality of peak values on a delay-Doppler plane, resulting in ambiguity. For the ZC sequence, a sequence capacity of the ZC sequence is limited. For the Zadoff-Chu Cover Alltop sequence, the Zadoff-Chu Cover Alltop sequence cannot resist a Doppler shift.

Therefore, how to improve the communication sequences is an urgent problem to be resolved.

**SUMMARY**

This application provides a communication method and apparatus, to improve existing communication sequences.

According to a first aspect, a communication method is provided, including:

A first apparatus generates a cubic polynomial exponential sequence, where a cubic term coefficient of the cubic polynomial exponential sequence is associated with a quadratic term coefficient of the cubic polynomial exponential sequence; and the first apparatus outputs the cubic polynomial exponential sequence.

An embodiment of this application provides a communication sequence. The communication sequence is the cubic polynomial exponential sequence, and the cubic term coefficient of the cubic polynomial exponential sequence is associated with the quadratic term coefficient.

Compared with existing communication sequences, a sequence capacity of the cubic polynomial exponential sequence is positively correlated with a cube of a sequence length of the cubic polynomial exponential sequence, the cubic polynomial exponential sequence can resist a Doppler shift with more subcarrier spacings, and a product of a maximum round-trip delay and a maximum Doppler shift is not constrained by the sequence length.

With reference to the first aspect, in some implementations of the first aspect, the cubic polynomial exponential sequence $s_{a,b,c,d}(n) = e^{-j2\pi(an3+bn2+cn+d)/N}$. $a$ represents the cubic term coefficient of the cubic polynomial exponential sequence, $b$ represents the quadratic term coefficient of the cubic polynomial exponential sequence, $c$ represents a linear term coefficient of the cubic polynomial exponential sequence, $d$ represents a constant term of the cubic polynomial exponential sequence, $N$ represents the sequence length of the cubic polynomial exponential sequence, $N$ represents a prime number, and $n \in \{0,1, ..., N - 1\}$.

With reference to the first aspect, in some implementations of the first aspect, the cubic polynomial exponential sequence includes a base sequence and a supplementary sequence. The base sequence $u_a(n) = e^{-j2\pi an3/N}$, and the supplementary sequence $v_{b,c}(n) = e^{-j2\pi(bn2+cn)/N}$.

With reference to the first aspect, in some implementations of the first aspect, a maximum value of an ambiguity function of the base sequence does not exceed $2\sqrt{N}$, and a quantity of base sequences is positively correlated with the sequence length. A maximum value of an ambiguity function of the supplementary sequence is $\sqrt{N}$, and a quantity of supplementary sequences is positively correlated with a square of the sequence length.

With reference to the first aspect, in some implementations of the first aspect, for $\forall \tau \in [0, \Delta_T - 1]$, $\forall \nu \in [0, \Delta_F - 1]$, a cubic term coefficient of an ambiguity function of the cubic polynomial exponential sequence, a quadratic term coefficient of the ambiguity function of the cubic polynomial exponential sequence, and a linear term coefficient of the ambiguity function of the cubic polynomial exponential sequence are not all 0. $\tau$ represents a round-trip delay, $\nu$ represents a Doppler shift, $\Delta_T$ represents a maximum round-trip delay, and $\Delta_F$ represents a maximum Doppler shift.

With reference to the first aspect, in some implementations of the first aspect, that the cubic term coefficient $a$ of the cubic polynomial exponential sequence is associated with the quadratic term coefficient $b$ of the cubic polynomial exponential sequence includes:

If the cubic term coefficient of the cubic polynomial exponential sequence is $a \in \{1,2, ... , N - 1\}$, the quadratic term coefficient of the cubic polynomial exponential sequence is $b = 3ak\Delta_T$, and the linear term coefficient of the cubic polynomial exponential sequence is $c = l\Delta_F$. $k \in \{0,1, ..., \lfloor N/\Delta_T \rfloor - 1\}$, $l \in \{0,1, ..., \lfloor N/\Delta_F \rfloor - 1\}$, $\Delta_T$

represents the maximum round-trip delay, and $\Delta_F$ represents the maximum Doppler shift.

With reference to the first aspect, in some implementations of the first aspect, a sequence capacity of the cubic polynomial exponential sequence is $(N-1) \cdot \lfloor N/\Delta_T \rfloor \cdot \lfloor N/\Delta_F \rfloor$.

With reference to the first aspect, in some implementations of the first aspect, the cubic polynomial exponential sequence is mapped on a time domain resource, and a discrete-time signal of the cubic polynomial exponential sequence is as follows:

$$s_{\lambda,k,l}(n) = e^{-j2\pi(\lambda n^3 + 3\lambda k\Delta_T n^2 + l\Delta_F n)/N},$$

where

$a = \lambda, b = 3\lambda k\Delta_T, c = l\Delta_F, d = 0, \lambda \in \{1,2,\dots,N\text{-}1\}$, $k \in \{0,1,\dots,\lfloor N/\Delta_T \rfloor - 1\}$, $l \in \{0,1,\dots,\lfloor N/\Delta_F \rfloor - 1\}$, $\Delta_T$ represents the maximum round-trip delay, and $\Delta_F$ represents the maximum Doppler shift. According to this embodiment of this application, the cubic polynomial exponential sequence is mapped to the time domain resource, so that a peak-to-average ratio can be reduced.

With reference to the first aspect, in some implementations of the first aspect, the cubic polynomial exponential sequence is mapped on a frequency domain resource, and a discrete-time signal of the cubic polynomial exponential sequence is as follows:

$$s_{\lambda,k,l}(n) = \frac{1}{\sqrt{N}} \sum_{m=0}^{M-1} e^{-j2\pi(\lambda n^3 + 3\lambda k\Delta_F n^2 + l\Delta_T n)/N} \cdot e^{j2\pi mn/N},$$

where

$a = \lambda, b = 3\lambda k\Delta_F, c = l\Delta_T, d = 0, \lambda \in \{1,2,\dots,N\text{-}1\}$, $k \in \{0,1,\dots,\lfloor N/\Delta_F \rfloor - 1\}$, $l \in \{0,1,\dots,\lfloor N/\Delta_T \rfloor - 1\}$, $\Delta_T$ represents the maximum round-trip delay, and $\Delta_F$ represents the maximum Doppler shift.

According to this embodiment of this application, the cubic polynomial exponential sequence is mapped to the frequency domain resource, to obtain an ideal autocorrelation characteristic.

With reference to the first aspect, in some implementations of the first aspect, a same cell corresponds to a same value of $\lambda$, and different cells correspond to different values of $\lambda$. Alternatively, a same cell corresponds to a plurality of values of $\lambda$, and different cells correspond to different values of $\lambda$.

With reference to the first aspect, in some implementations of the first aspect, that the first apparatus outputs the cubic polynomial exponential sequence includes:

The first apparatus generates a sequence set, where the sequence set corresponds to a same value of $\lambda$, different values of $k$, and different values of $l$; the first apparatus selects the cubic polynomial exponential sequence from the sequence set; and the first apparatus outputs the cubic polynomial exponential sequence.

With reference to the first aspect, in some implementations of the first aspect, a maximum value of a cross-ambiguity function of the cubic polynomial exponential sequence in the sequence set is $\sqrt{N}$, and a quantity of sequences in the sequence set is $\lfloor N/\Delta_T \rfloor \cdot \lfloor N/\Delta_F \rfloor$.

$\Delta_T$ represents the maximum round-trip delay, and $\Delta_F$ represents the maximum Doppler shift.

With reference to the first aspect, in some implementations of the first aspect, a radius of a cell in which the first apparatus is located ranges from 0 to $c(\Delta_T - 1)T_s/2$. $c$ represents a speed of light, $T_s$ represents a symbol time interval, and $\Delta_T$ represents the maximum round-trip delay.

With reference to the first aspect, in some implementations of the first aspect, a moving speed range of the first apparatus is from $-c(\Delta_F - 1)\Delta f/4f_c$ to $c(\Delta_F - 1)\Delta f/4f_c$. $c$ represents the speed of light, $f_c$ represents a carrier frequency, $\Delta f$ represents a subcarrier spacing, and $\Delta_F$ represents the maximum Doppler shift.

According to a second aspect, a communication method is provided, including:

A second apparatus generates a plurality of cubic polynomial exponential sequences. The plurality of cubic polynomial exponential sequences form a sequence set. A cubic term coefficient of the cubic polynomial exponential sequence is associated with a quadratic term coefficient of the cubic polynomial exponential sequence. The second apparatus receives a first sequence from a first apparatus. The second apparatus determines the first sequence in the sequence set, and determines a round-trip delay and/or a Doppler shift. The first sequence is a sequence in the sequence set.

It may be understood that the first sequence is a cubic polynomial exponential sequence generated by the first apparatus, and a cubic term coefficient of the first sequence is associated with a quadratic term coefficient of the first sequence. For details, refer to the description in the first aspect.

With reference to the second aspect, in some implementations of the second aspect, the cubic polynomial exponential sequence $s_{a,b,c,d}(n) = e^{-j2\pi(an3+bn2+cn+d)/N}$. $a$ represents the cubic term coefficient of the cubic polynomial exponential sequence, $b$ represents the quadratic term coefficient of the cubic polynomial exponential sequence, $c$ represents a linear term coefficient of the cubic polynomial exponential sequence, $d$ represents a constant term of the cubic polynomial exponential sequence, $N$ represents a sequence length of the cubic polynomial exponential sequence, $N$ represents a prime number, and $n \in \{0, 1, ..., N - 1\}$.

With reference to the second aspect, in some implementations of the second aspect, the cubic polynomial exponential sequence includes a base sequence and a supplementary sequence. The base sequence $u_a(n) = e^{-j2\pi an3/N}$, and the supplementary sequence $v_{b,c}(n) = e^{-j2\pi(bn2+cn)/N}$.

With reference to the second aspect, in some implementations of the second aspect, a maximum value of an ambiguity function of the base sequence does not exceed $2\sqrt{N}$, and a quantity of base sequences is positively correlated with the sequence length. A maximum value of an ambiguity function of the supplementary sequence is $\sqrt{N}$, and a quantity of supplementary sequences is positively correlated with a square of the sequence length.

With reference to the second aspect, in some implementations of the second aspect, for $\forall \tau \in [0, \Delta_T - 1]$, $\forall \nu \in [0, \Delta_F - 1]$, a cubic term coefficient of an ambiguity function of the cubic polynomial exponential sequence, a quadratic term coefficient of the ambiguity function of the cubic polynomial exponential sequence, and a linear term coefficient of the ambiguity function of the cubic polynomial exponential sequence are not all 0. $\tau$ represents a round-trip delay, $\nu$ represents a Doppler shift, $\Delta_T$ represents a maximum round-trip delay, and $\Delta_F$ represents a maximum Doppler shift.

With reference to the second aspect, in some implementations of the second aspect, that the cubic term coefficient $a$ of the cubic polynomial exponential sequence is associated with the quadratic term coefficient $b$ of the cubic polynomial exponential sequence includes:

If the cubic term coefficient of the cubic polynomial exponential sequence is $a \in \{1, 2, ..., N - 1\}$, the quadratic term coefficient of the cubic polynomial exponential sequence is $b = 3ak\Delta_T$, and the linear term coefficient of the cubic polynomial exponential sequence is $c = l\Delta_F$. $k \in \{0, 1, ..., \lfloor N/\Delta_T \rfloor - 1\}$, $l \in \{0, 1, ..., \lfloor N/\Delta_F \rfloor - 1\}$, $\Delta_T$ represents the maximum round-trip delay, and $\Delta_F$ represents the maximum Doppler shift.

With reference to the second aspect, in some implementations of the second aspect, a sequence capacity of the cubic polynomial exponential sequence is $(N - 1) \cdot \lfloor N/\Delta_T \rfloor \cdot \lfloor N/\Delta_F \rfloor$.

With reference to the second aspect, in some implementations of the second aspect, the cubic polynomial exponential sequence is mapped on a time domain resource, and a discrete-time signal of the cubic polynomial exponential sequence is as follows:

$$s_{\lambda,k,l}(n) = e^{-j2\pi(\lambda n^3 + 3\lambda k\Delta_T n^2 + l\Delta_F n)/N},$$

where

$a = \lambda$, $b = 3\lambda k\Delta_T$, $c = l\Delta_F$, $d = 0$, $\lambda \in \{1, 2, ..., N - 1\}$, $k \in \{0, 1, ..., \lfloor N/\Delta_T \rfloor - 1\}$, $l \in \{0, 1, ..., \lfloor N/\Delta_F \rfloor - 1\}$, $\Delta_T$ represents the maximum round-trip delay, and $\Delta_F$ represents the maximum Doppler shift.

According to this embodiment of this application, in some cases, the second apparatus may alternatively output the cubic polynomial exponential sequence, and the cubic polynomial exponential sequence is mapped to the time domain resource, so that a peak-to-average ratio can be reduced.

With reference to the second aspect, in some implementations of the second aspect, the cubic polynomial exponential sequence is mapped on a frequency domain resource, and a discrete-time signal of the cubic polynomial exponential sequence is as follows:

$$s_{\lambda,k,l}(n) = \frac{1}{\sqrt{N}} \sum_{m=0}^{M-1} e^{-j2\pi(\lambda n^3 + 3\lambda k\Delta_F n^2 + l\Delta_T n)/N} \cdot e^{j2\pi mn/N},$$

where

$a = \lambda$, $b = 3\lambda k\Delta_F$, $c = l\Delta_T$, $d = 0$, $\lambda \in \{1, 2, ..., N - 1\}$, $k \in \{0, 1, ..., \lfloor N/\Delta_F \rfloor - 1\}$, $l \in \{0, 1, ..., \lfloor N/\Delta_T \rfloor - 1\}$, $\Delta_T$ represents the maximum round-trip delay, and $\Delta_F$ represents the maximum Doppler shift.

According to this embodiment of this application, the second apparatus may alternatively output the cubic polynomial exponential sequence, and the cubic polynomial exponential sequence is mapped to the frequency domain resource, to obtain an ideal autocorrelation characteristic.

With reference to the second aspect, in some implementations of the second aspect, a same cell corresponds to a same value of $\lambda$, and different cells correspond to different values of $\lambda$. Alternatively, a same cell corresponds to a plurality

of values of $\lambda$, and different cells correspond to different values of $\lambda$.

With reference to the second aspect, in some implementations of the second aspect, a maximum value of an ambiguity function of any two different cubic polynomial exponential sequences in the sequence set is $\sqrt{N}$, and a quantity of sequences in the sequence set is $\lfloor N/\Delta_T \rfloor \cdot \lfloor N/\Delta_F \rfloor$.

With reference to the second aspect, in some implementations of the second aspect, a radius of a cell in which the first apparatus is located ranges from 0 to $c(\Delta_T - 1)T_s/2$. $c$ represents a speed of light, $T_s$ represents a symbol time interval, and $\Delta_T$ represents the maximum round-trip delay.

With reference to the second aspect, in some implementations of the second aspect, a moving speed range of the first apparatus is from $-c(\Delta_F - 1)\Delta f/4f_c$ to $c(\Delta_F - 1)\Delta f/4f_c$. $c$ represents the speed of light, $f_c$ represents a carrier frequency, $\Delta f$ represents a subcarrier spacing, and $\Delta_F$ represents the maximum Doppler shift.

According to a third aspect, a communication apparatus is provided. The communication apparatus may be a first apparatus, or may be a module or unit (for example, a chip, a chip system, or a circuit), in the first apparatus, that performs and that one-to-one corresponds to the method, the operations, the steps, or the actions described in the first aspect, or may be an apparatus that can be used in combination with the first apparatus.

In a possible implementation, the communication apparatus includes a transceiver unit and a processing unit connected to the transceiver unit.

The processing unit is configured to generate a cubic polynomial exponential sequence, where a cubic term coefficient of the cubic polynomial exponential sequence is associated with a quadratic term coefficient of the cubic polynomial exponential sequence. The transceiver unit is configured to output the cubic polynomial exponential sequence.

With reference to the third aspect, in some implementations of the third aspect, the cubic polynomial exponential sequence $s_{a,b,c,d}(n) = e^{-j2\pi(an3+bn2+cn+d)/N}$. $a$ represents the cubic term coefficient of the cubic polynomial exponential sequence, $b$ represents the quadratic term coefficient of the cubic polynomial exponential sequence, $c$ represents a linear term coefficient of the cubic polynomial exponential sequence, $d$ represents a constant term of the cubic polynomial exponential sequence, $N$ represents a sequence length of the cubic polynomial exponential sequence, $N$ represents a prime number, and $n \in \{0,1, ..., N-1\}$.

With reference to the third aspect, in some implementations of the third aspect, the cubic polynomial exponential sequence includes a base sequence and a supplementary sequence. The base sequence $u_a(n) = e^{-j2\pi an3/N}$, and the supplementary sequence $v_{b,c}(n) = e^{-j2\pi(bn2+cn)/N}$.

With reference to the third aspect, in some implementations of the third aspect, a maximum value of an ambiguity function of the base sequence does not exceed $2\sqrt{N}$, and a quantity of base sequences is positively correlated with the sequence length. A maximum value of an ambiguity function of the supplementary sequence is $\sqrt{N}$, and a quantity of supplementary sequences is positively correlated with a square of the sequence length.

With reference to the third aspect, in some implementations of the third aspect, for $\forall \tau \in [0, \Delta_T - 1]$, $\forall \nu \in [0, \Delta_F - 1]$, a cubic term coefficient of an ambiguity function of the cubic polynomial exponential sequence, a quadratic term coefficient of the ambiguity function of the cubic polynomial exponential sequence, and a linear term coefficient of the ambiguity function of the cubic polynomial exponential sequence are not all 0. $\tau$ represents a round-trip delay, $\nu$ represents a Doppler shift, $\Delta_T$ represents a maximum round-trip delay, and $\Delta_F$ represents a maximum Doppler shift.

With reference to the third aspect, in some implementations of the third aspect, that the cubic term coefficient $a$ of the cubic polynomial exponential sequence is associated with the quadratic term coefficient $b$ of the cubic polynomial exponential sequence includes:

If the cubic term coefficient of the cubic polynomial exponential sequence is $a \in \{1,2, ... , N-1\}$, the quadratic term coefficient of the cubic polynomial exponential sequence is $b = 3ak\Delta_T$, and the linear term coefficient of the cubic polynomial exponential sequence is $c = l\Delta_F$. $k \in \{0,1, ..., \lfloor N/\Delta_T \rfloor - 1\}$, $l \in \{0,1, ..., \lfloor N/\Delta_F \rfloor - 1\}$, $\Delta_T$ represents the maximum round-trip delay, and $\Delta_F$ represents the maximum Doppler shift.

With reference to the third aspect, in some implementations of the third aspect, a sequence capacity of the cubic polynomial exponential sequence is $(N-1) \cdot \lfloor N/\Delta_T \rfloor \cdot \lfloor N/\Delta_F \rfloor$.

With reference to the third aspect, in some implementations of the third aspect, the transceiver unit is configured to map the cubic polynomial exponential sequence on a time domain resource, and a discrete-time signal of the cubic polynomial exponential sequence is as follows:

$$s_{\lambda,k,l}(n) = e^{-j2\pi(\lambda n^3 + 3\lambda k\Delta_T n^2 + l\Delta_F n)/N},$$

where

$a = \lambda, b = 3\lambda k\Delta_T, c = l\Delta_F, d = 0, \lambda \in \{1, 2, \dots, N\text{-}1\}$, $k \in \{0, 1, \dots, \lfloor N/\Delta_T \rfloor - 1\}$, $l \in \{0, 1, \dots, \lfloor N/\Delta_F \rfloor - 1\}$, $\Delta_T$ represents the maximum round-trip delay, and $\Delta_F$ represents the maximum Doppler shift.

With reference to the third aspect, in some implementations of the third aspect, the transceiver unit is configured to map the cubic polynomial exponential sequence on a frequency domain resource, and a discrete-time signal of the cubic polynomial exponential sequence is as follows:

$$s_{\lambda,k,l}(n) = \frac{1}{\sqrt{N}} \sum_{m=0}^{M-1} e^{-j2\pi(\lambda n^3 + 3\lambda k\Delta_F n^2 + l\Delta_T n)/N} \cdot e^{j2\pi mn/N},$$

where

$a = \lambda, b = 3\lambda k\Delta_F, c = l\Delta_T, d = 0, \lambda \in \{1, 2, \dots, N\text{-}1\}$, $k \in \{0, 1, \dots, \lfloor N/\Delta_F \rfloor - 1\}$, $l \in \{0, 1, \dots, \lfloor N/\Delta_T \rfloor - 1\}$, $\Delta_T$ represents the maximum round-trip delay, and $\Delta_F$ represents the maximum Doppler shift.

With reference to the third aspect, in some implementations of the third aspect, a same cell corresponds to a same value of $\lambda$, and different cells correspond to different values of $\lambda$. Alternatively, a same cell corresponds to a plurality of values of $\lambda$, and different cells correspond to different values of $\lambda$.

With reference to the third aspect, in some implementations of the third aspect, the processing unit is configured to generate a sequence set, where the sequence set corresponds to a same value of $\lambda$, different values of $k$, and different values of $l$. The processing unit selects the cubic polynomial exponential sequence from the sequence set.

With reference to the third aspect, in some implementations of the third aspect, a maximum value of a cross-ambiguity function of the cubic polynomial exponential sequence in the sequence set is $\sqrt{N}$, and a quantity of sequences in the sequence set is $\lfloor N/\Delta_T \rfloor \cdot \lfloor N/\Delta_F \rfloor$.

$\Delta_T$ represents the maximum round-trip delay, and $\Delta_F$ represents the maximum Doppler shift.

With reference to the third aspect, in some implementations of the third aspect, a radius of a cell in which the first apparatus is located ranges from 0 to $c(\Delta_T - 1)T_s/2$. $c$ represents a speed of light, $T_s$ represents a symbol time interval, and $\Delta_T$ represents the maximum round-trip delay.

With reference to the third aspect, in some implementations of the third aspect, a moving speed range of the first apparatus is from $- c(\Delta_F - 1)\Delta f/4f_c$ to $c(\Delta_F - 1)\Delta f/4f_c$. $c$ represents the speed of light, $f_c$ represents a carrier frequency, $\Delta f$ represents a subcarrier spacing, and $\Delta_F$ represents the maximum Doppler shift.

According to a fourth aspect, a communication apparatus is provided. The communication apparatus may be a second apparatus, or may be a module or unit (for example, a chip, a chip system, or a circuit), in the second apparatus, that performs and that one-to-one corresponds to the method, the operations, the steps, or the actions described in the second aspect, or may be an apparatus that can be used in combination with the second apparatus.

In a possible implementation, the communication apparatus includes a transceiver unit and a processing unit connected to the transceiver unit.

The processing unit generates a plurality of cubic polynomial exponential sequences. The plurality of cubic polynomial exponential sequences form a sequence set. A cubic term coefficient of the cubic polynomial exponential sequence is associated with a quadratic term coefficient of the cubic polynomial exponential sequence. The transceiver unit is configured to receive a first sequence from a first apparatus. The processing unit is configured to: determine the first sequence in the sequence set, and determine a round-trip delay and/or a Doppler shift. The first sequence is a sequence in the sequence set.

It may be understood that the first sequence is a cubic polynomial exponential sequence generated by the first apparatus, and a cubic term coefficient of the first sequence is associated with a quadratic term coefficient of the first sequence. For details, refer to the description in the first aspect.

With reference to the fourth aspect, in some implementations of the fourth aspect, the cubic polynomial exponential sequence $s_{a,b,c,d}(n) = e^{-j2\pi(an^3 + bn^2 + cn + d)/N}$. $a$ represents the cubic term coefficient of the cubic polynomial exponential sequence, $b$ represents the quadratic term coefficient of the cubic polynomial exponential sequence, $c$ represents a linear term coefficient of the cubic polynomial exponential sequence, $d$ represents a constant term of the cubic polynomial exponential sequence, $N$ represents a sequence length of the cubic polynomial exponential sequence, $N$ represents a prime number, and $n \in \{0, 1, \dots, N\text{-}1\}$.

With reference to the fourth aspect, in some implementations of the fourth aspect, the cubic polynomial exponential sequence includes a base sequence and a supplementary sequence. The base sequence $u_a(n) = e^{-j2\pi an^3/N}$, and the supplementary sequence $v_{b,c}(n) = e^{-j2\pi(bn^2 + cn)/N}$.

With reference to the fourth aspect, in some implementations of the fourth aspect, a maximum value of an ambiguity function of the base sequence does not exceed $2\sqrt{N}$, and a quantity of base sequences is positively correlated with the sequence length. A maximum value of an ambiguity function of the supplementary sequence is $\sqrt{N}$, and a quantity of supplementary sequences is positively correlated with a square of the sequence length.

With reference to the fourth aspect, in some implementations of the fourth aspect, for $\forall \tau \in [0, \Delta_T - 1]$, $\forall \nu \in [0, \Delta_F - 1]$, a cubic term coefficient of an ambiguity function of the cubic polynomial exponential sequence, a quadratic term coefficient of the ambiguity function of the cubic polynomial exponential sequence, and a linear term coefficient of the ambiguity function of the cubic polynomial exponential sequence are not all 0. $\tau$ represents a round-trip delay, $\nu$ represents a Doppler shift, $\Delta_T$ represents a maximum round-trip delay, and $\Delta_F$ represents a maximum Doppler shift.

With reference to the fourth aspect, in some implementations of the fourth aspect, that the cubic term coefficient $a$ of the cubic polynomial exponential sequence is associated with the quadratic term coefficient $b$ of the cubic polynomial exponential sequence includes:

If the cubic term coefficient of the cubic polynomial exponential sequence is $a \in \{1, 2, \ldots, N-1\}$, the quadratic term coefficient of the cubic polynomial exponential sequence is $b = 3ak\Delta_T$, and the linear term coefficient of the cubic polynomial exponential sequence is $c = l\Delta_F$. $k \in \{0, 1, \ldots, \lfloor N/\Delta_T \rfloor - 1\}$, $l \in \{0, 1, \ldots, \lfloor N/\Delta_F \rfloor - 1\}$, $\Delta_T$ represents the maximum round-trip delay, and $\Delta_F$ represents the maximum Doppler shift.

With reference to the fourth aspect, in some implementations of the fourth aspect, a sequence capacity of the cubic polynomial exponential sequence is $(N-1) \cdot \lfloor N/\Delta_T \rfloor \cdot \lfloor N/\Delta_F \rfloor$.

With reference to the fourth aspect, in some implementations of the fourth aspect, the transceiver unit is configured to map the cubic polynomial exponential sequence on a time domain resource, and a discrete-time signal of the cubic polynomial exponential sequence is as follows:

$$s_{\lambda,k,l}(n) = e^{-j2\pi(\lambda n^3 + 3\lambda k\Delta_T n^2 + l\Delta_F n)/N},$$

where

$a = \lambda$, $b = 3\lambda k\Delta_T$, $c = l\Delta_F$, $d = 0$, $\lambda \in \{1, 2, \ldots, N-1\}$, $k \in \{0, 1, \ldots, \lfloor N/\Delta_T \rfloor - 1\}$, $l \in \{0, 1, \ldots, \lfloor N/\Delta_F \rfloor - 1\}$, $\Delta_T$ represents the maximum round-trip delay, and $\Delta_F$ represents the maximum Doppler shift. According to this embodiment of this application, the cubic polynomial exponential sequence is mapped to the time domain resource, so that a peak-to-average ratio can be reduced.

With reference to the fourth aspect, in some implementations of the fourth aspect, the transceiver unit is configured to map the cubic polynomial exponential sequence on a frequency domain resource, and a discrete-time signal of the cubic polynomial exponential sequence is as follows:

$$s_{\lambda,k,l}(n) = \frac{1}{\sqrt{N}} \sum_{m=0}^{M-1} e^{-j2\pi(\lambda n^3 + 3\lambda k\Delta_F n^2 + l\Delta_T n)/N} \cdot e^{j2\pi mn/N},$$

where

$a = \lambda$, $b = 3\lambda k\Delta_F$, $c = l\Delta_T$, $d = 0$, $\lambda \in \{1, 2, \ldots, N-1\}$, $k \in \{0, 1, \ldots, \lfloor N/\Delta_F \rfloor - 1\}$, $l \in \{0, 1, \ldots, \lfloor N/\Delta_T \rfloor - 1\}$, $\Delta_T$ represents the maximum round-trip delay, and $\Delta_F$ represents the maximum Doppler shift.

According to this embodiment of this application, the cubic polynomial exponential sequence is mapped to the frequency domain resource, to obtain an ideal autocorrelation characteristic.

With reference to the fourth aspect, in some implementations of the fourth aspect, a same cell corresponds to a same value of $\lambda$, and different cells correspond to different values of $\lambda$. Alternatively, a same cell corresponds to a plurality of values of $\lambda$, and different cells correspond to different values of $\lambda$.

With reference to the fourth aspect, in some implementations of the fourth aspect, a maximum value of an ambiguity function of any two different cubic polynomial exponential sequences in the sequence set is $\sqrt{N}$, and a quantity of sequences in the sequence set is $\lfloor N/\Delta_T \rfloor \cdot \lfloor N/\Delta_F \rfloor$.

With reference to the fourth aspect, in some implementations of the fourth aspect, a radius of a cell in which the first apparatus is located ranges from 0 to $c(\Delta_T - 1)T_s/2$. $c$ represents a speed of light, $T_s$ represents a symbol time interval, and $\Delta_T$ represents the maximum round-trip delay.

With reference to the fourth aspect, in some implementations of the fourth aspect, a moving speed range of the first apparatus is from $-c(\Delta_F - 1)\Delta f/4f_c$ to $c(\Delta_F - 1)\Delta f/4f_c$. $c$ represents the speed of light, $f_c$ represents a carrier frequency, $\Delta f$ represents a subcarrier spacing, and $\Delta_F$ represents the maximum Doppler shift.

According to a fifth aspect, a communication apparatus is provided, including a communication interface and a processor. The communication interface is configured to output and/or input a signal, and the processor is configured to execute a computer program or instructions stored in a memory, to enable the communication apparatus to perform the method according to the first aspect or the second aspect.

Optionally, the memory may be included in the communication apparatus. In a manner, the memory and the processor may be disposed separately. In another manner, the memory may be located in the processor and integrated with the processor.

Optionally, the memory may alternatively be outside the communication apparatus and coupled to the processor.

According to a sixth aspect, a computer-readable storage medium is provided, and includes a computer program. When the computer program is run on a computer, the computer is enabled to perform the method according to any possible implementation of the first aspect or the second aspect.

According to a seventh aspect, a chip or a chip system is provided. The chip or the chip system includes a processing circuit and an input/output interface. The processing circuit is configured to perform the method according to any possible implementation of the first aspect or the second aspect.

According to an eighth aspect, a computer program product is provided. The computer program product includes a computer program (which may also be referred to as code or instructions). When the computer program is run, a computer is enabled to perform the method according to any possible implementation of the first aspect or the second aspect.

According to a ninth aspect, a communication system is provided, including a first apparatus and a second apparatus. The first apparatus is configured to perform the method according to any possible implementation of the first aspect, and the second apparatus is configured to perform the method according to any possible implementation of the second aspect.

## BRIEF DESCRIPTION OF DRAWINGS

FIG. 1 shows a communication system to which this application is applicable;

FIG. 2 shows a method according to this application;

FIG. 3 shows an auto-ambiguity function of a ZC-like sequence and an auto-ambiguity function of an Alltop-like sequence;

FIG. 4 shows a cross-ambiguity function of a ZC-like sequence and a cross-ambiguity function of an Alltop-like sequence;

FIG. 5 shows an ambiguity function of multiplexing ZC-like sequences and an ambiguity function of multiplexing cubic polynomial exponential sequences;

FIG. 6 shows a method according to this application;

FIG. 7 is a block diagram of a communication apparatus according to this application; and

FIG. 8 is another block diagram of a communication apparatus according to this application.

## DESCRIPTION OF EMBODIMENTS

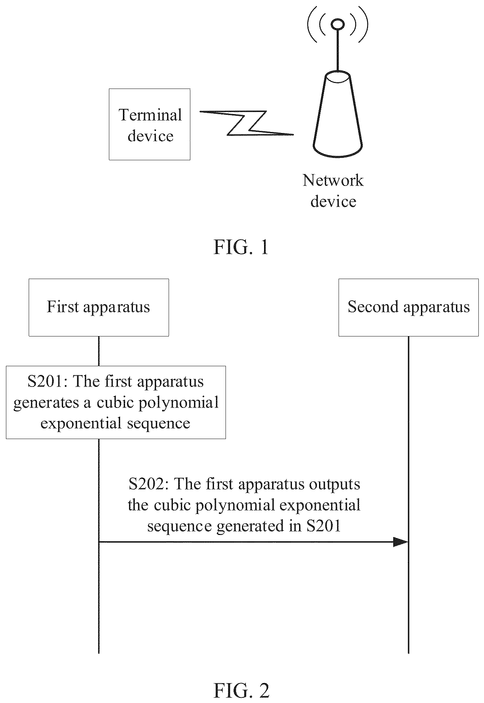

FIG. 1 shows a communication system 100 to which this application is applicable. The communication system 100 includes a terminal device and a network device.

For ease of understanding, terms in this application are first described.

(1) Terminal device

In this application, the terminal device may be various devices that provide voice and/or data connectivity for a user, and may also be referred to as a terminal, user equipment (user equipment, UE), a mobile station, a mobile terminal, or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IoT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer having wireless sending and receiving functions, a wearable device, an aerospace device, or the like. In embodiments of this application, a chip used in the foregoing device may also be referred to as a terminal.

(2) Network device

The network device in embodiments of this application may be an access network device such as a base station. The base station may be a base transceiver station (base transceiver station, BTS) in a global system for mobile communications (global system for mobile communications, GSM) or a code division multiple access (code division multiple access, CDMA) system, or may be a base station in a wideband code division multiple access (wideband code division multiple access, WCDMA) system, or may be an evolved NodeB (evolved NodeB, eNB, or eNodeB) in a long term evolution (long term evolution, LTE) system, or a next generation NodeB (next generation NodeB, gNB) in a 5th generation (5th generation, 5G) mobile communication system, a next generation base station in a 6th generation (6th generation, 6G) mobile communication system, a base station in a future mobile communication system, or the like. A specific technology and a specific device form used by the network device are not limited in embodiments of this application. For example, the network device may alternatively be a module or a unit that completes some functions of the base station, for example, may be a central unit (central unit, CU), or may be a distributed unit (distributed unit, DU). The CU and the DU separately perform some protocol stack functions of the base station. In addition, functions of the CU may be implemented by a plurality of entities. For example, control plane (control plane, CP) and user plane (user plane, UP) functions of the CU are separated to form a CU control plane (CU-CP) and a CU user plane (CU-UP). For example, the CU-CP and the CU-UP may be implemented by different function entities, and are connected through an E1 interface. The CU-CP and the CU-UP may be coupled to the DU.

(3) Ambiguity function

Ambiguity functions include an auto-ambiguity function and a cross-ambiguity function.
The auto-ambiguity function is a correlation between a signal #1 and a signal #2. The signal #2 is a signal obtained after the signal #1 is affected by a delay and a Doppler shift.
The cross-ambiguity function is a correlation between a signal #A and a signal #B. The signal #A is a signal obtained after a signal #C is affected by a delay and a Doppler shift. The signal #B and the signal #C are in a same sequence set.

(4) Zero ambiguity zone

The zero ambiguity zone means that an ambiguity function is equal to zero within a specific delay range and a specific Doppler range.

(5) Low ambiguity zone

The low ambiguity zone means that a value of an ambiguity function is less than a preset threshold within a specific delay range and a specific Doppler range.

(6) Zero correlation zone

The zero correlation zone means that a correlation function is equal to zero within a specific delay range.

(7) Low correlation zone

The low correlation zone means that a value of a correlation function is less than a preset threshold within a specific delay range.

(8) Sequence capacity

The sequence capacity is a quantity of sequences included in a sequence set.
The following describes the problems addressed in this application.
Currently, in a communication system, frequently-used communication sequences include an Alltop sequence, a ZC sequence, and a Zadoff-Chu Cover Alltop sequence. However, these communication sequences all have some disadvantages.

(1) Alltop sequence

For an Alltop sequence with a length of $N$, a discrete-time signal thereof may be represented as follows:

$$s_\lambda(n) = e^{-j2\pi(n^3+\lambda n)/N}$$

A linear term coefficient $\lambda \in \{0,1, ..., N - 1\}$, and $N$ represents a sequence length of the sequence. An ambiguity function of the Alltop sequence is represented as follows:

$$\left|A_{s_\lambda,s_\mu}(\tau,\nu)\right| = \begin{cases} N & \lambda = (\mu + \nu) \bmod N, \tau = 0 \\ 0 & \lambda = \mu, \tau = 0, \nu \neq 0 \\ \sqrt{N} & \tau \neq 0 \end{cases}$$

The ambiguity function of the Alltop sequence has a plurality of peak values on a delay-Doppler plane, resulting in ambiguity.

The delay-Doppler plane may be understood as a two-dimensional plane including a delay axis and a Doppler axis. Details about this are not described below again.

(2) ZC sequence

In a case, a discrete-time signal of the ZC sequence may be represented as follows:

$$s_{u,k}(n) = e^{-j\pi u(n+k\Delta_T)(n+k\Delta_T+1)/N}$$

$\Delta_T$ represents a zero correlation zone, $k$ represents a cyclic shift index, $N$ represents a sequence length of the sequence, $u$ represents a root sequence number, and $u \in \{1,2, ..., N - 1\}$. An ambiguity function of the ZC sequence is represented as follows:

$$\left|A_{s_u,s_v}(\tau,\nu)\right| = \begin{cases} N & u = v, \nu = u\tau \bmod N \\ 0 & u = v, \nu \neq u\tau \bmod N \\ \sqrt{N} & u \neq v \end{cases}$$

It can be learned from the foregoing expression that a sequence capacity of the ZC sequence is positively correlated with a square of the sequence length, and the sequence capacity is limited.

In addition, generation of a cyclic shift of the ZC sequence includes three cases: a cyclic shift in an unrestricted set (unrestricted set), a cyclic shift of a restricted set type A (restricted set type A), and a cyclic shift of a restricted set type B (restricted set type B). In a scenario in which a terminal device moves at a high speed, to ensure resistance of a Doppler shift, a cyclic shift can be obtained for the ZC sequence based on the cyclic shift of the restricted set type A or the cyclic shift of the restricted set type B. Therefore, the sequence capacity is further reduced.

In addition, the cyclic shift obtained for the ZC sequence based on the cyclic shift of the restricted set type A can resist a Doppler shift with no more than 1 subcarrier spacings, and the cyclic shift obtained for the ZC sequence based on the cyclic shift of the restricted set type B can resist a Doppler shift with no more than 2 subcarrier spacings. Depending on the cyclic shift of the restricted set type A or the cyclic shift of the restricted set type B, a maximum Doppler shift supported by the current ZC sequence is also limited.

In addition, for the ZC sequence, there is also a specific constraint on a maximum zero ambiguity zone area (that is, a product of a maximum round-trip delay and the maximum Doppler shift). For example, the maximum zero ambiguity zone area does not exceed the sequence length of the ZC sequence.

(3) Zadoff-Chu Cover Alltop sequence

In a scenario in which a terminal device moves at a high speed, the Zadoff-Chu Cover Alltop sequence cannot resist a Doppler shift. A discrete-time signal of the Zadoff-Chu Cover Alltop sequence is expressed as follows:

$$s_{l,w,v}(n) = e^{-j2\pi[l(n+w)^3+l\lambda n]/N} \cdot e^{-j\pi u(n+v\Delta_T)(n+v\Delta_T+1)/N}$$

$l, w \in \{0,1, ..., N - 1\}$, $v \in \{0,1, ..., \lfloor N/\Delta_T \rfloor - 1\}$. A sequence capacity in the low correlation zone is

$N^2 \cdot \lfloor N/\Delta_\mathrm{T} \rfloor$ , and a maximum value of a cross-correlation function is $\sqrt{N}$ . A correlation function of the Zadoff-Chu Cover Alltop sequence may be expressed as follows:

$$\left|C_{s_{l_1,w_1,v_1},s_{l_2,w_2,v_2}}(\tau)\right| = \begin{cases} N & l_1 = l_2, w_1 = (w_2 - \tau) \bmod N, v_1 = v_2, \tau = 0 \\ 0 & l_1 = l_2, w_1 = (w_2 - \tau) \bmod N, (v_1 \neq v_2) \vee (\tau \neq 0) \\ \sqrt{N} & l_1 = l_2, w_1 \neq (w_2 - \tau) \bmod N \\ \leq 2\sqrt{N} & l_1 \neq l_2 \end{cases}$$

For the foregoing problems, this application provides a method, to optimize the communication sequences. FIG. 2 shows a method 200 provided in this application. The method 200 includes the following steps.

S201: A first apparatus generates (or constructs) a cubic polynomial exponential sequence.

A cubic term coefficient of the cubic polynomial exponential sequence is associated with a quadratic term coefficient of the cubic polynomial exponential sequence.

For example, the cubic polynomial exponential sequence may be represented as follows:

$$s_{a,b,c,d}(n) = e^{-j2\pi(an^3 + bn^2 + cn + d)/N}$$

*a* represents the cubic term coefficient of the cubic polynomial exponential sequence, *b* represents the quadratic term coefficient of the cubic polynomial exponential sequence, *c* represents a linear term coefficient of the cubic polynomial exponential sequence, *d* represents a constant term of the cubic polynomial exponential sequence, *N* represents a sequence length of the cubic polynomial exponential sequence, *N* represents a prime number, and $n \in \{0, 1, ..., N - 1\}$.

It may be understood that the constant term *d* of the cubic polynomial exponential sequence may be considered as rotating all symbols in the sequence $s_{a,b,c,d}(n)$ by a common phase $e^{-j2\pi d/N}$. Because phase rotation does not change correlation and ambiguity of the sequence, and generality is not lost, when *d* = 0, the cubic polynomial exponential sequence is degraded to $s_{a,b,c}(n) = e^{-j2\pi(an^3 + bn^2 + cn)/N}$.

In an implementation, the cubic polynomial exponential sequence includes a base sequence and a supplementary sequence. The base sequence $u_a(n) = e^{-j2\pi an^3/N}$, and the supplementary sequence $v_{b,c}(n) = e^{-j2\pi(bn^2 + cn)/N}$. That is, the cubic polynomial exponential sequence may be represented as $s_{a,b,c}(n) = u_a(n) \cdot v_{b,c}(n)$. In other words, the cubic polynomial exponential sequence may be represented as a form of element-wise multiplication of the base sequence and the supplementary sequence. A sequence length of the base sequence and a sequence length of the supplementary sequence are both *N*.

For example, if the base sequence is $[u_a(0), u_a(1), ..., u_a(N - 1)]$, and the supplementary sequence is $[v_{b,c}(0), v_{b,c}(1), ..., v_{b,c}(N - 1)]$, a result of element-wise multiplication of the base sequence and the supplementary sequence is $[u_a(0) \cdot v_{b,c}(0), u_a(1) \cdot v_{b,c}(1), ..., u_a(N - 1) \cdot v_{b,c}(N - 1)]$.

In this embodiment of this application, the base sequence is a sequence associated with a cell. For example, a same cell may correspond to a same base sequence, and different cells correspond to different base sequences. Alternatively, a same cell may correspond to a plurality of base sequences, but different cells correspond to different base sequences. The supplementary sequence is a sequence associated with a terminal device in a cell. For example, in a same cell, supplementary sequences corresponding to different terminal devices may be different.

The following describes the base sequence and the supplementary sequence.

(A) Base sequence

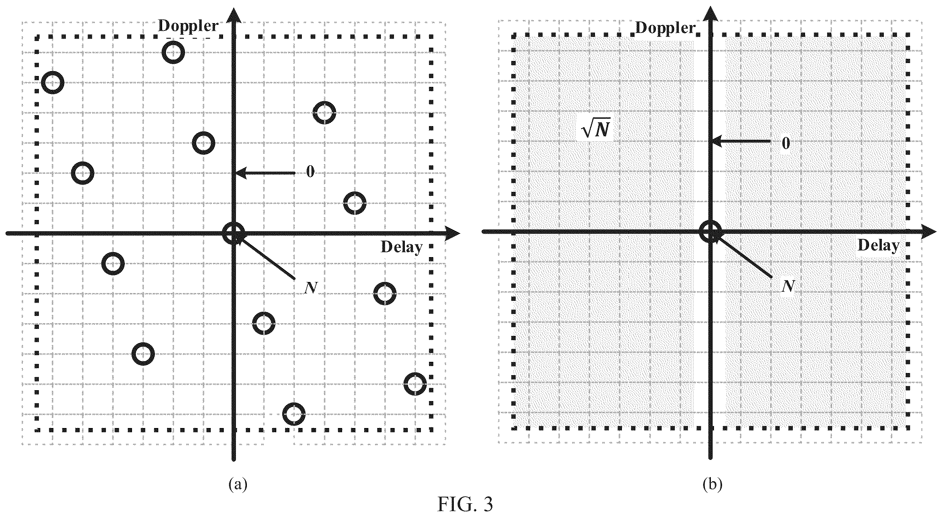

(a) in FIG. 3 shows an auto-ambiguity function of a ZC-like sequence (that is, a sequence similar to the ZC sequence, which may also be referred to as a quadratic polynomial exponential sequence). (b) in FIG. 3 shows an auto-ambiguity function of an Alltop-like sequence (that is, a sequence similar to the Alltop sequence, which may also be referred to as a cubic polynomial exponential sequence).

It can be learned from FIG. 3 that the auto-ambiguity function of the ZC-like sequence has a plurality of peak values on a delay-Doppler plane (that is, the auto-ambiguity function of the ZC-like sequence has a multi-peak characteristic). The auto-ambiguity function of the Alltop-like sequence has only one peak value on the delay-Doppler plane (that is, the auto-ambiguity function of the Alltop-like sequence has a single-peak characteristic).

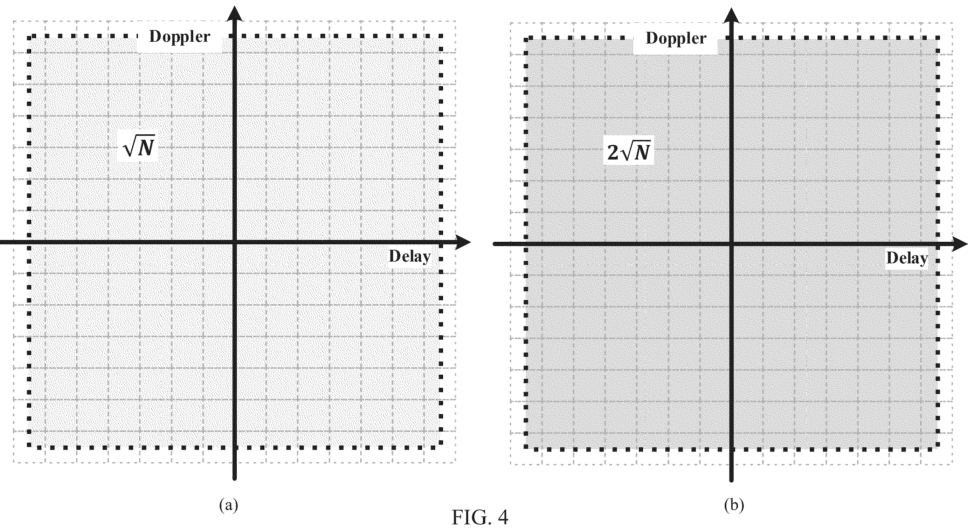

(a) in FIG. 4 shows a cross-ambiguity function of the ZC-like sequence. (b) in FIG. 4 shows a cross-ambiguity function of the Alltop-like sequence.

It can be learned from FIG. 4 that the cross-ambiguity function of the ZC-like sequence has no peak value on the delay-Doppler plane, and a maximum value of the cross-ambiguity function of the ZC-like sequence is $\sqrt{N}$. The cross-ambiguity function of the Alltop-like sequence also has no peak value on the delay-Doppler plane, and a maximum value of the cross-ambiguity function of the Alltop-like sequence does not exceed $2\sqrt{N}$.

In this embodiment of this application, a requirement for the base sequence is as follows: The auto-ambiguity function of the base sequence has the single-peak characteristic on the delay-Doppler plane, and the cross-ambiguity function of the base sequence has no peak value on the delay-Doppler plane. Therefore, with reference to FIG. 3 and FIG. 4, in this application, the Alltop-like sequence is used as the base sequence. In other words, the base sequence is an exponential sequence whose highest degree term is cubic.

In a possible case, the base sequence is $n_a(n) = e^{-j2\pi a n^3/N}$, $a \in \{1, 2, \ldots, N-1\}$. It can be learned from the expression of the base sequence that there are $N - 1$ base sequences. In other words, a quantity of base sequences is positively correlated with the sequence length of the base sequence.

An ambiguity function of base sequences $u_{a_1}(n) = e^{-j2\pi a_1 n^3/N}$ and $u_{a_2}(n) = e^{-j2\pi a_2 n^3/N}$ is as follows:

$$\left|A_{u_{a_1},u_{a_2}}(\tau,\nu)\right| = \begin{cases} N & a_1 = a_2, \tau = 0, \nu = 0 \\ 0 & a_1 = a_2, \tau = 0, \nu \neq 0 \\ \sqrt{N} & a_1 = a_2, \tau \neq 0 \\ \leq 2\sqrt{N} & a_1 \neq a_2 \end{cases}$$

$\tau$ represents a round-trip delay, and v represents a Doppler shift. Meanings of $\tau$ and v are not described below.

It can be learned from the ambiguity function of the base sequence that the maximum value of the cross-ambiguity function of the base sequence does not exceed $2\sqrt{N}$.

(B) Relationship between the base sequence and the supplementary sequence

In this embodiment of this application, an ambiguity function of cubic polynomial exponential sequences $s_{a_1,b_1,c_1}(n) = e^{-j2\pi(a_1 n^3 + b_1 n^2 + c_1 n)/N}$ and $s_{a_2,b_2,c_2}(n) = e^{-j2\pi(a_2 n^3 + b_2 n^2 + c_2 n)/N}$ is as follows:

$$\left|A_{s_{a_1,b_1,c_1},s_{a_2,b_2,c_2}}(\tau,\nu)\right|$$

$$= \sum_{n=0}^{N-1} s_{a_1,b_1,c_1}(n) s^*_{a_2,b_2,c_2}[(n-\tau) \bmod N] e^{j2\pi n\nu/N}$$

$$= \sum_{n=0}^{N-1} e^{-j2\pi\left[(a_1-a_2)n^3 + (b_1-b_2+3a_2\tau)n^2 + (c_1-c_2+2b_2\tau-3a_2\tau^2+\nu)n + a_2\tau^3 - b_2\tau^2 + c_2\tau\right]/N}$$

$$= \begin{cases} N & a_1 = a_2, b_1 = (b_2 - 3a_2\tau) \bmod N, c_1 = (c_2 - 2b_2\tau + 3a_2\tau^2 + \nu) \bmod N \\ 0 & a_1 = a_2, b_1 = (b_2 - 3a_2\tau) \bmod N, c_1 \neq (c_2 - 2b_2\tau + 3a_2\tau^2 + \nu) \bmod N \\ \sqrt{N} & a_1 = a_2, b_1 \neq (b_2 - 3a_2\tau) \bmod N \\ \leq 2\sqrt{N} & a_1 \neq a_2 \end{cases}$$

If the ambiguity function of the cubic polynomial exponential sequence in an ambiguity zone does not have the peak value $N$, a maximum value of the ambiguity function of the cubic polynomial exponential sequence in the ambiguity zone does not exceed $2\sqrt{N}$. When the sequence length is long enough (for example, $N = 839$), $N$ is much greater than $2\sqrt{N}$. That is, as long as the peak value of the ambiguity function is excluded from the ambiguity zone, it can be ensured that the maximum value of the ambiguity function in the ambiguity zone is small.

In this embodiment of this application, an implementation condition that "the ambiguity function of the cubic polynomial exponential sequence does not have the peak value in the ambiguity zone " is as follows: For $\forall \tau \in [0, \Delta_T - 1]$, $\forall \nu \in [0, \Delta_F - 1]$, a cubic term coefficient of the ambiguity function of the cubic polynomial exponential sequence, a quadratic term coefficient of the ambiguity function of the cubic polynomial exponential sequence, and a linear term coefficient of the ambiguity function of the cubic polynomial exponential sequence are not all 0.

The cubic term coefficient of the ambiguity function of the cubic polynomial exponential sequence is $(a_1 - a_2)$ mod $N$.

The quadratic term coefficient of the ambiguity function of the cubic polynomial exponential sequence is $(b_1 - b_2 + 3a_2\tau)$ mod $N$.

The linear term coefficient of the ambiguity function of the cubic polynomial exponential sequence is $(c_1 - c_2 + 2b_2\tau - 3a_2\tau^2 + \nu)$ mod $N$.

In other words, the implementation condition that "the ambiguity function of the cubic polynomial exponential sequence does not have the peak value in the ambiguity zone" is that "$a_1 = a_2, b_1 = (b_2 - 3a_2\tau)$ mod $N$, $c_1 = (c_2 - 2b_2\tau + 3a_2\tau^2 + \nu)$ mod $N$" is not true in the ambiguity function of the cubic polynomial exponential sequence.

It may be learned from this that if a cubic term coefficient of the base sequence is $a \in \{1, 2, ..., N-1\}$, a quadratic term coefficient of the supplementary sequence is $b = 3ak\Delta_T$, and a linear term coefficient of the supplementary sequence is $c = l\Delta_F$. $k \in \{0, 1, ..., \lfloor N/\Delta_T \rfloor - 1\}$ and $l \in \{0, 1, ..., \lfloor N/\Delta_F \rfloor - 1\}$.

That is, the quadratic term coefficient of the supplementary sequence is associated with the cubic term coefficient of the base sequence. Alternatively, the quadratic term coefficient of the supplementary sequence is a function of the cubic term coefficient of the base sequence.

Optionally, the quadratic term coefficient of the supplementary sequence and the cubic term coefficient of the base sequence may also be in another association relationship, for example, $b = -3ak\Delta_T$, and $k \in \{0, 1, ..., \lfloor N/\Delta_T \rfloor - 1\}$.

Optionally, a value range of the linear term coefficient of the supplementary sequence may be another value range, for example, $c = -l\Delta_F$, and $l \in \{0, 1, ..., \lfloor N/\Delta_F \rfloor - 1\}$.

A quantity of base sequences is $N - 1$, a quantity of supplementary sequences is $\lfloor N/\Delta_T \rfloor \cdot \lfloor N/\Delta_F \rfloor$, and a sequence capacity of the cubic polynomial exponential sequence $s_{a,b,c}(n) = e^{-j2\pi(an^3 + bn^2 + cn)/N}$ is $(N-1) \cdot \lfloor N/\Delta_T \rfloor \cdot \lfloor N/\Delta_F \rfloor$. In other words, the sequence capacity of the cubic polynomial exponential sequence is positively correlated with a square of the sequence length.

In conclusion, beneficial effects of the cubic polynomial exponential sequence provided in this application are manifested in the following aspects.

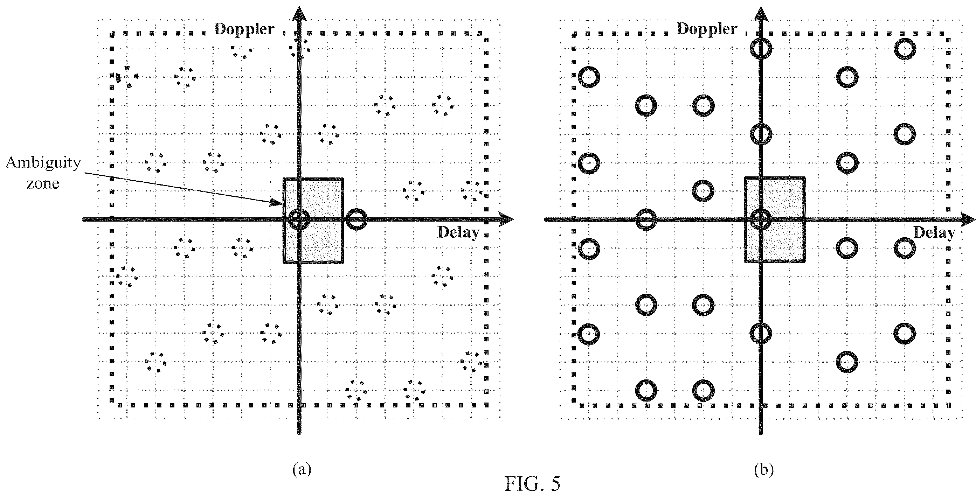

(1) Compared with the ZC sequence, the sequence capacity of the cubic polynomial exponential sequence is large.
(2) Compared with the ZC sequence, the cubic polynomial exponential sequence can resist a Doppler shift with more subcarrier spacings. This is described by using an example. It is assumed that a sequence length of the ZC-like sequence and a sequence length of the cubic polynomial exponential sequence are both 13, and an ambiguity zone of the ZC-like sequence and an ambiguity zone of the cubic polynomial exponential sequence are both $\Delta_T \times \Delta_F = 2 \times 3$. (a) in FIG. 5 shows an ambiguity function of multiplexing ZC-like sequences. (b) in FIG. 5 shows an ambiguity function of multiplexing cubic polynomial exponential sequences.

It can be learned from FIG. 5 that to avoid periodic peak values of the ambiguity function, only two ZC-like sequences can be multiplexed. However, in this application, 24 cubic polynomial exponential sequences can be multiplexed by using the single-peak characteristic of the ambiguity function.

(3) Compared with that a maximum zero ambiguity zone area supported by the ZC sequence does not exceed the sequence length, a maximum low ambiguity zone area of the cubic polynomial exponential sequence may exceed the sequence length, that is, $\Delta_T \times \Delta_F > N$.

S202: The first apparatus outputs the cubic polynomial exponential sequence generated in S201. Correspondingly, a second apparatus receives the cubic polynomial exponential sequence.

The following describes two cases of "outputting by the first apparatus to the second apparatus".

Case 1:

The first apparatus and the second apparatus may be both included in a terminal device, or may be both included in a network device. In this case, "outputting" by the first apparatus to the second apparatus is an internal operation.

Case 2:

The first apparatus may be an apparatus in a terminal device (or is a terminal device), and the second apparatus may be an apparatus in a network device (or is a network device). In this case, "outputting" by the first apparatus to the second apparatus may be understood as "sending" by the first apparatus to the second apparatus.

In Case 2, a manner of "sending" by the first apparatus to the second apparatus may include the following two manners.

Manner A:

The first apparatus may map the cubic polynomial exponential sequence to a time domain resource, and a discrete-time signal of the cubic polynomial exponential sequence may be represented as follows:

$$s_{\lambda,k,l}(n) = e^{-j2\pi(\lambda n^3 + 3\lambda k \Delta_{\mathrm{T}} n^2 + l\Delta_{\mathrm{F}} n)/N}$$

Compared with a general expression $s_{a,b,c,d}(n) = e^{-j2\pi(an^3+bn^2+cn+d)/N}$ of the cubic exponential and sequence, $a = \lambda$, $b = 3\lambda k\Delta_{\mathrm{T}}$, $c = l\Delta_{\mathrm{F}}$, $d = 0$, $\lambda \in \{1,2, \ldots, N\text{-}1\}$, $k \in \{0,1, \ldots, \lfloor N/\Delta_{\mathrm{T}} \rfloor - 1\}$, $l \in \{0,1, \ldots, \lfloor N/\Delta_{\mathrm{F}} \rfloor - 1\}$, $\Delta_{\mathrm{T}}$ represents a maximum round-trip delay, $\Delta_{\mathrm{F}}$ represents a maximum Doppler shift, and $\Delta_{\mathrm{T}} \times \Delta_{\mathrm{F}}$ represents the ambiguity zone. The parameter $\lambda$ is a parameter associated with a cell. For example, a same cell corresponds to a same value of $\lambda$, and different cells correspond to different values of $\lambda$. Alternatively, a same cell corresponds to a plurality of values of $\lambda$, and different cells correspond to different values of $\lambda$.

The parameters $k$ and $l$ are parameters associated with a terminal device in the cell. For different terminal devices in a same cell, the parameters $k$ and/or $l$ may be different.

In addition, a value range of a cell radius of a cell in which the terminal device is located is from 0 to $c(\Delta_{\mathrm{T}}\text{-}1)T_{\mathrm{s}}/2$, $c$ represents a speed of light, and $T_{\mathrm{s}}$ represents a symbol time interval. This is also applicable to Manner B below.

A moving speed range of the terminal device is from $-c(\Delta_{\mathrm{F}}\text{-}1)\Delta f/4f_c$ to $c(\Delta_{\mathrm{F}}\text{-}1)\Delta f/4f_c$, $c$ represents the speed of light, $f_c$ represents a carrier frequency, and $\Delta f$ represents a subcarrier spacing. This is also applicable to Manner B below.

An ambiguity function of the cubic polynomial exponential sequences $s_{\lambda_1,k_1,l_1}(n) = e^{-j2\pi(\lambda_1 n^3 + 3\lambda_1 k_1 \Delta_{\mathrm{T}} n^2 + l_1 \Delta_{\mathrm{F}} n)/N}$ and $s_{\lambda_2,k_2,l_2}(n) = e^{-j2\pi(\lambda_2 n^3 + 3\lambda_2 k_2 \Delta_{\mathrm{T}} n^2 + l_2 \Delta_{\mathrm{F}} n)/N}$ that are mapped to the time domain resource may be expressed as follows:

$$\left| A_{s_{\lambda_1,k_1,l_1},s_{\lambda_2,k_2,l_2}}(\tau,\nu) \right| = \begin{cases} N & \lambda_1 = \lambda_2, k_1 = k_2, l_1 = l_2, \tau = 0, \nu = 0 \\ 0 & \lambda_1 = \lambda_2, k_1 = k_2, \tau = 0, (l_1 \neq l_2) \vee (\nu \neq 0) \\ \sqrt{N} & \lambda_1 = \lambda_2, (k_1 \neq k_2) \vee (\tau \neq 0) \\ \leq 2\sqrt{N} & \lambda_1 \neq \lambda_2 \end{cases}$$

In a same cell ($\lambda_1 = \lambda_2$), a maximum value of a cross-ambiguity function of the cubic polynomial exponential sequence is $\sqrt{N}$. Between different cells ($\lambda_1 \neq \lambda_2$), the maximum value of the cross-ambiguity function of the cubic polynomial exponential sequence does not exceed $2\sqrt{N}$.

According to this embodiment of this application, because the cubic polynomial exponential sequence is a constant modulus sequence, the cubic polynomial exponential sequence is mapped to the time domain resource, so that a peak-to-average ratio can be reduced.

Manner B:

The first apparatus may map the cubic polynomial exponential sequence to a frequency domain resource, and a discrete-time signal of the cubic polynomial exponential sequence may be represented as follows:

$$s_{\lambda,k,l}(n) = \frac{1}{\sqrt{N}} \sum_{m=0}^{M-1} e^{-j2\pi(\lambda n^3 + 3\lambda k \Delta_{\mathrm{F}} n^2 + l\Delta_{\mathrm{T}} n)/N} \cdot e^{j2\pi mn/N}$$

Compared with a general expression $s_{a,b,c,d}(n) = e^{-j2\pi(an^3+bn^2+cn+d)/N}$ of the cubic exponential and sequence, $a = \lambda$, $b = 3\lambda k\Delta_{\mathrm{F}}$, $c = l\Delta_{\mathrm{T}}$, $d = 0$, $\lambda \in \{1,2, \ldots, N\text{-}1\}$, $k \in \{0,1, \ldots, \lfloor N/\Delta_{\mathrm{F}} \rfloor - 1\}$, $l \in \{0,1, \ldots, \lfloor N/\Delta_{\mathrm{T}} \rfloor - 1\}$, $\Delta_{\mathrm{T}}$ represents a maximum round-trip delay, $\Delta_{\mathrm{F}}$ represents a maximum Doppler shift, and $\Delta_{\mathrm{T}} \times \Delta_{\mathrm{F}}$ represents the ambiguity zone.

The parameter $\lambda$ is a parameter associated with a cell. The parameters $k$ and $l$ are parameters associated with a terminal device in the cell. For this, refer to Manner A. Details are not described herein again.

An ambiguity function of the cubic polynomial exponential sequences $s_{\lambda_1,k_1,l_1}(n) = e^{-j2\pi(\lambda_1 n3 + 3\lambda_1 k_1 \Delta_F n2 + l_1 \Delta_T n)/N}$ and $s_{\lambda_2,k_2,l_2}(n) = e^{-j2\pi(\lambda_2 n3 + 3\lambda_2 k_2 \Delta_F n2 + l_2 \Delta_T n)/N}$ that are mapped to the frequency domain resource may be expressed as follows:

$$\left|A_{s_{\lambda_1,k_1,l_1},s_{\lambda_2,k_2,l_2}}(\tau,v)\right| = \begin{cases} N & \lambda_1 = \lambda_2, k_1 = k_2, l_1 = l_2, \tau = 0, v = 0 \\ 0 & \lambda_1 = \lambda_2, k_1 = k_2, (l_1 \neq l_2) \vee (\tau \neq 0), v = 0 \\ \sqrt{N} & \lambda_1 = \lambda_2, (k_1 \neq k_2) \vee (v \neq 0) \\ \leq 2\sqrt{N} & \lambda_1 \neq \lambda_2 \end{cases}$$

In a same cell ($\lambda_1 = \lambda_2$), a maximum value of a cross-ambiguity function of the cubic polynomial exponential sequence is $\sqrt{N}$. Between different cells ($\lambda_1 \neq \lambda_2$), the maximum value of the cross-ambiguity function of the cubic polynomial exponential sequence does not exceed $2\sqrt{N}$. Particularly, when $\lambda_1 = \lambda_2, k_1 = k_2, l_1 \neq l_2, \tau \neq 0, v = 0$, the cubic polynomial exponential sequences $s_{\lambda_1,k_1,l_1}(n)$ and $s_{\lambda_2,k_2,l_2}(n)$ that are mapped to the frequency domain resource have a zero correlation zone.

That is, because the cubic polynomial exponential sequence is a constant modulus sequence, according to the Wiener-Khinchin theorem, mapping the constant modulus sequence to the frequency domain resource has an ideal time domain autocorrelation characteristic. Therefore, the zero correlation zone may be formed by mapping the cubic polynomial exponential sequence to the frequency domain resource.

In this embodiment of this application, the constant modulus sequence may be understood as a phase coding sequence with a constant amplitude. The constant modulus sequence may also be referred to as a constant amplitude sequence or a constant envelope sequence.

It may be understood that the communication sequence constructed based on embodiments of this application may have a plurality of purposes. In a case, the communication sequence constructed in this application may be used in a random access process of the terminal device.

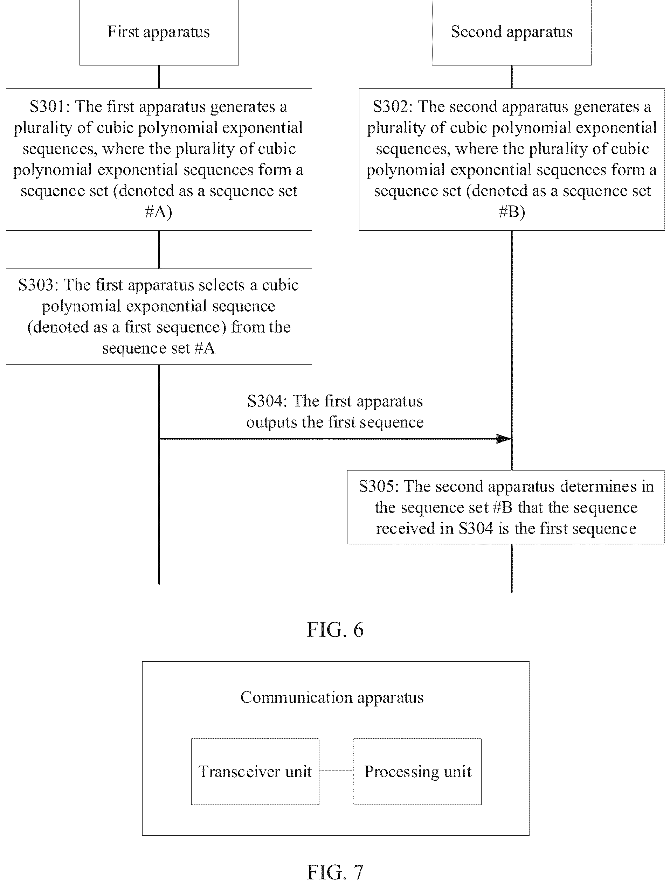

With reference to a method 300 shown in FIG. 6, the following describes use of the communication sequence in the random access process. It may be understood that in the random access process, the first apparatus is a terminal device (or an apparatus in a terminal device), and the second apparatus is a network device (or an apparatus in a network device). Specifically, the method 300 includes the following steps.

S301: The first apparatus generates (or constructs) a plurality of cubic polynomial exponential sequences, where the plurality of cubic polynomial exponential sequences form a sequence set (denoted as a sequence set #A).

Specifically, the first apparatus may generate the plurality of cubic polynomial exponential sequences according to the method in S201. Details are not described herein again. The sequence set #A corresponds to a same value of $\lambda$, different values of $k$, and different values of $l$.

For example, for the same value of $\lambda$, the first apparatus may traverse all values of $k$, and traverse all values of $l$, to form the sequence set #A.

S302: The second apparatus generates (or, constructs) a plurality of cubic polynomial exponential sequences, where the plurality of cubic polynomial exponential sequences form a sequence set (denoted as a sequence set # B).

It may be understood that the second apparatus may also generate the plurality of cubic polynomial exponential sequences according to the same method as the first apparatus, to form the sequence set #B. Details are not described herein again.

For example, the sequence set #A and the sequence set #B may be a same sequence set. For example, the sequence set #A and the sequence set #B correspond to a terminal device in a cell and a network device in the cell, and correspond to a same value of $\lambda$. In addition, for the value of $\lambda$, both the first apparatus and the second apparatus traverse all the values of $k$, and traverse all the values of $l$.

Certainly, the sequence set #A may alternatively be different from the sequence set #B. This is not limited in this application.

S303: The first apparatus selects a cubic polynomial exponential sequence from the sequence set #A. For ease of description, the cubic polynomial exponential sequence selected by the first apparatus is denoted as a first sequence.

In an optional manner, the first apparatus may randomly select a cubic polynomial exponential sequence from the sequence set #A.

S304: The first apparatus outputs the first sequence. Correspondingly, the second apparatus receives the first sequence.

For this process, refer to Case 2 in S202. Details are not described herein again.

S305: The second apparatus determines in the sequence set #B that the sequence received in S304 is the first sequence.

In a manner, the second apparatus may traverse sequences in the sequence set #B, and compare the sequences with the sequence received in S304, to determine that the sequence received in S304 is the first sequence, thereby determining the round-trip delay and/or the Doppler shift.

In another case, the communication sequence constructed in this application may be further used in a sensing procedure of the terminal device and/or the network device.

Optionally, the first apparatus sends the cubic polynomial exponential sequence, and receives an echo of the cubic polynomial exponential sequence. The first apparatus determines a round-trip delay and a Doppler shift of a sensing target, to obtain a distance and a moving speed of the sensing target.

Optionally, the first apparatus sends the cubic polynomial exponential sequence, and the second apparatus receives the cubic polynomial exponential sequence. The second apparatus determines a delay and a Doppler shift of a sensing target, to obtain a distance and a moving speed of the sensing target.

The foregoing describes the methods provided in this application. FIG. 7 shows a communication apparatus according to an embodiment of this application. The communication apparatus includes a transceiver unit and a processing unit.

The transceiver unit may be configured to implement a corresponding information receiving and sending function. The transceiver unit may also be referred to as a communication interface or a communication unit. The processing unit may be configured to perform a processing operation.

For example, the apparatus further includes a storage unit. The storage unit may be configured to store instructions and/or data. The processing unit may read the instructions and/or the data in the storage unit, so that the apparatus implements actions of an apparatus in the foregoing method embodiments.

In an implementation, the apparatus may be the first apparatus in the foregoing embodiments, or may be a component (for example, a chip) of the first apparatus. The transceiver unit and the processing unit may be configured to implement related operations of the first apparatus.

For example, the transceiver unit may be configured to perform S202. The processing unit may be configured to perform S201.

For another example, the transceiver unit may be configured to perform S304. The processing unit may be configured to perform S301 and S303.

In another implementation, the apparatus may be the second apparatus in the foregoing embodiments, or may be a component (for example, a chip) of the second apparatus. The transceiver unit and the processing unit may be configured to implement related operations of the second apparatus.

For example, the transceiver unit may be configured to perform S202.

For another example, the transceiver unit may be configured to perform S304. The processing unit may be configured to perform S302 and S305.

It may be understood that a specific process in which the units perform the foregoing corresponding steps is described in detail in the foregoing method embodiments. For brevity, details are not described herein again.

The transceiver unit may be replaced with a transceiver (for example, a sending unit in the transceiver unit may be replaced with a transmitter, and a receiving unit in the transceiver unit may be replaced with a receiver), and another unit such as the processing unit may be replaced with a processor, to respectively perform receiving and sending operations and processing-related operations in the foregoing method embodiments.

In addition, the transceiver unit may alternatively be a transceiver circuit (for example, may include a receiving circuit and a sending circuit), and the processing unit may be a processing circuit.

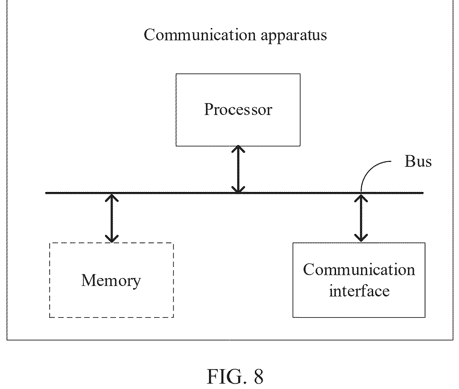

FIG. 8 shows another communication apparatus according to an embodiment of this application. The communication apparatus includes a processor and a communication interface. The processor is configured to execute a program or instructions stored in a memory, or read data stored in the memory, to perform related actions in the foregoing method embodiments. For example, there may be one or more processors. The communication interface is configured to receive and/or send a signal.

For example, the communication apparatus may further include a memory, and the memory is configured to store a computer program or instructions and/or data. The memory may be integrated with the processor, or may be disposed separately. Certainly, the communication apparatus may alternatively not include the memory, and the memory may be disposed outside the communication apparatus. For example, there may be one or more memories.

For example, the processor, the communication interface, and the memory are connected to each other through a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in the figure, but this does not mean that there is only one bus or only one type of bus.

It may be understood that the processor mentioned in embodiments of this application may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), or a programmable logic device (programmable logic device, PLD). The PLD may be a complex programmable logic device (complex programmable logic device, CPLD), a field-programmable logic gate array (field-programmable gate array, FPGA), generic array logic (generic array logic, GAL), or any combination thereof.

It may be further understood that the memory mentioned in embodiments of this application may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

It may be understood that if embodiments of this application are implemented in a form of software and sold or used as an independent product, a corresponding program (which may also be referred to as code or instructions) may be stored in a readable storage medium. Therefore, this application further provides a readable storage medium, including a program. When the program is run on a device or a computer, the device or the computer is enabled to perform any possible implementation of the foregoing solutions.

The readable storage medium includes any medium that can store program code, such as a USB flash drive, a removable hard disk, a ROM, a RAM, a magnetic disk, an optical disc, or the like.

The technical solutions of this application may be embodied in a form of a software product. Therefore, this application further provides a program product. The program product includes a program. When the program is run, a device or a computer is enabled to perform any possible implementation of the foregoing solutions.

In addition, an embodiment of this application further provides a chip system (or a chip). The chip system includes a processor and an interface circuit. The interface circuit is configured to send and/or receive data, instructions, or information for the processor. The processor is configured to perform any possible implementation of the foregoing solutions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:

   generating, by a first apparatus, a cubic polynomial exponential sequence, wherein a cubic term coefficient of the cubic polynomial exponential sequence is associated with a quadratic term coefficient of the cubic polynomial exponential sequence; and
   outputting, by the first apparatus, the cubic polynomial exponential sequence.

2. The method according to claim 1, wherein the cubic polynomial exponential sequence $s_{a,b,c,d}(n) = e^{-j2\pi(an^3+bn^2+cn+d)/N}$, $a$ represents the cubic term coefficient of the cubic polynomial exponential sequence, $b$ represents the quadratic term coefficient of the cubic polynomial exponential sequence, $c$ represents a linear term coefficient of the cubic polynomial exponential sequence, $d$ represents a constant term of the cubic polynomial exponential sequence, $N$ represents a sequence length of the cubic polynomial exponential sequence, $N$ represents a prime number, and $n \in \{0, 1, ..., N - 1\}$.

3. The method according to claim 2, wherein
   the cubic polynomial exponential sequence comprises a base sequence and a supplementary sequence, the base sequence $n_a(n) = e^{-j2\pi an^3/N}$, and the supplementary sequence $v_{b,c}(n) = e^{-j2\pi(bn^2+cn)/N}$.

4. The method according to claim 3, wherein

   a maximum value of an ambiguity function of the base sequence does not exceed $2\sqrt{N}$, and a quantity of base sequences is positively correlated with the sequence length; and

   a maximum value of an ambiguity function of the supplementary sequence is $\sqrt{N}$, and a quantity of supplementary sequences is positively correlated with a square of the sequence length.

5. The method according to any one of claims 2 to 4, wherein for $\forall \tau \in [0, \Delta_T - 1]$, $\forall v \in [0, \Delta_F - 1]$, a cubic term coefficient of an ambiguity function of the cubic polynomial exponential sequence, a quadratic term coefficient of the ambiguity function of the cubic polynomial exponential sequence, and a linear term coefficient of the ambiguity function of the cubic polynomial exponential sequence are not all 0, $\tau$ represents a round-trip delay, $v$ represents a Doppler shift, $\Delta_T$ represents a maximum round-trip delay, and $\Delta_F$ represents a maximum Doppler shift.

6. The method according to any one of claims 2 to 5, wherein that the cubic term coefficient *a* of the cubic polynomial exponential sequence is associated with the quadratic term coefficient *b* of the cubic polynomial exponential sequence comprises:

if the cubic term coefficient of the cubic polynomial exponential sequence is $a \in \{1,2, ..., N - 1\}$, the quadratic term coefficient of the cubic polynomial exponential sequence is $b = 3ak\Delta_T$, and the linear term coefficient of the cubic polynomial exponential sequence is $c = l\Delta_F$, wherein

$k \in \{0,1, ..., \lfloor N/\Delta_T \rfloor - 1\}, \ l \in \{0,1, ..., \lfloor N/\Delta_F \rfloor - 1\}$, $\Delta_T$ represents the maximum round-trip delay, and $\Delta_F$ represents the maximum Doppler shift.

7. The method according to claim 6, wherein a sequence capacity of the cubic polynomial exponential sequence is

$(N - 1) \cdot \lfloor N/\Delta_T \rfloor \cdot \lfloor N/\Delta_F \rfloor$.

8. The method according to any one of claims 2 to 7, wherein the cubic polynomial exponential sequence is mapped on a time domain resource, and a discrete-time signal of the cubic polynomial exponential sequence is as follows:

$$s_{\lambda,k,l}(n) = e^{-j2\pi(\lambda n^3 + 3\lambda k\Delta_T n^2 + l\Delta_F n)/N},$$

wherein

$a = \lambda, b = 3\lambda k\Delta_T, c = l\Delta_F, d = 0, \lambda \in \{1,2, ..., N\text{-}1\}, \ k \in \{0,1, ..., \lfloor N/\Delta_T \rfloor - 1\}, \ l \in \{0,1, ..., \lfloor N/\Delta_F \rfloor - 1\}$, $\Delta_T$ represents the maximum round-trip delay, and $\Delta_F$ represents the maximum Doppler shift.

9. The method according to any one of claims 2 to 7, wherein the cubic polynomial exponential sequence is mapped on a frequency domain resource, and a discrete-time signal of the cubic polynomial exponential sequence is as follows:

$$s_{\lambda,k,l}(n) = \frac{1}{\sqrt{N}} \sum_{m=0}^{M-1} e^{-j2\pi(\lambda n^3 + 3\lambda k\Delta_F n^2 + l\Delta_T n)/N} \cdot e^{j2\pi mn/N},$$

wherein

$a = \lambda, b = 3\lambda k\Delta_F, c = l\Delta_T, d = 0, \lambda \in \{1,2, ..., N\text{-}1\}, \ k \in \{0,1, ..., \lfloor N/\Delta_F \rfloor - 1\}, \ l \in \{0,1, ..., \lfloor N/\Delta_T \rfloor - 1\}$, $\Delta_T$ represents the maximum round-trip delay, and $\Delta_F$ represents the maximum Doppler shift.

10. The method according to either of claims 8 and 9, wherein

a same cell corresponds to a same value of $\lambda$, and different cells correspond to different values of $\lambda$; or
a same cell corresponds to a plurality of values of $\lambda$, and different cells correspond to different values of $\lambda$.

11. The method according to any one of claims 8 to 10, wherein outputting, by the first apparatus, the cubic polynomial exponential sequence comprises:

generating, by the first apparatus, a sequence set, wherein the sequence set corresponds to a same value of $\lambda$, different values of *k,* and different values of *l*;
selecting, by the first apparatus, the cubic polynomial exponential sequence from the sequence set; and
outputting, by the first apparatus, the cubic polynomial exponential sequence.

12. The method according to claim 11, wherein

a maximum value of a cross-ambiguity function of the cubic polynomial exponential sequence in the sequence set is $\sqrt{N}$, and a quantity of sequences in the sequence set is $\lfloor N/\Delta_T \rfloor \cdot \lfloor N/\Delta_F \rfloor$, wherein

$\Delta_T$ represents the maximum round-trip delay, and $\Delta_F$ represents the maximum Doppler shift.

13. The method according to any one of claims 1 to 12, wherein a radius of a cell in which the first apparatus is located ranges from 0 to $c(\Delta_T - 1)T_s/2$, $c$ represents a speed of light, $T_s$ represents a symbol time interval, and $\Delta_T$ represents the maximum round-trip delay.

14. The method according to any one of claims 1 to 13, wherein a moving speed range of the first apparatus is from $-c(\Delta_F - 1)\Delta f/4f_c$ to $c(\Delta_F - 1)\Delta f/4f_c$, $c$ represents the speed of light, $f_c$ represents a carrier frequency, $\Delta f$ represents a subcarrier spacing, and $\Delta_F$ represents the maximum Doppler shift.

15. A communication method, comprising:

generating, by a second apparatus, a plurality of cubic polynomial exponential sequences, wherein the plurality of cubic polynomial exponential sequences form a sequence set, and a cubic term coefficient of the cubic polynomial exponential sequence is associated with a quadratic term coefficient of the cubic polynomial exponential sequence;
receiving, by the second apparatus, a cubic polynomial exponential sequence from a first apparatus; and
determining, by the second apparatus, the cubic polynomial exponential sequence, a round-trip delay, and/or a Doppler shift, wherein the cubic polynomial exponential sequence is a sequence in the sequence set.

16. A communication apparatus, comprising a unit configured to perform the method according to any one of claims 1 to 14, or comprising a unit configured to perform claim 15.

17. A communication apparatus, comprising a communication interface and a processor, wherein the processor is configured to execute a computer program or instructions, to enable the communication apparatus to perform the method according to any one of claims 1 to 14, or enable the communication apparatus to perform the method according to claim 15.

18. A communication system, wherein the communication system comprises a first apparatus and a second apparatus;

the first apparatus is configured to perform the method according to any one of claims 1 to 14; and
the second apparatus is configured to perform the method according to claim 15.

19. A computer-readable storage medium, comprising a computer program or instructions, wherein when the computer program or the instructions are run on a computer, the computer is enabled to perform the method according to any one of claims 1 to 14, or the computer is enabled to perform the method according to claim 15.

20. A computer program product, comprising instructions, wherein when the instructions are run on a computer, the computer is enabled to perform the method according to any one of claims 1 to 14, or the computer is enabled to perform the method according to claim 15.

Terminal
device

Network
device

FIG. 1

First apparatus

Second apparatus

S201: The first apparatus
generates a cubic polynomial
exponential sequence

S202: The first apparatus outputs
the cubic polynomial exponential
sequence generated in S201

FIG. 2

(a)                                    (b)

FIG. 3

EP 4 716 119 A1

(a)

(b)

FIG. 4

(a)

(b)

FIG. 5

First apparatus

Second apparatus

S301: The first apparatus generates a plurality of cubic polynomial exponential sequences, where the plurality of cubic polynomial exponential sequences form a sequence set (denoted as a sequence set #A)

S302: The second apparatus generates a plurality of cubic polynomial exponential sequences, where the plurality of cubic polynomial exponential sequences form a sequence set (denoted as a sequence set #B)

S303: The first apparatus selects a cubic polynomial exponential sequence (denoted as a first sequence) from the sequence set #A

S304: The first apparatus outputs the first sequence

S305: The second apparatus determines in the sequence set #B that the sequence received in S304 is the first sequence

FIG. 6

Communication apparatus

Transceiver unit —— Processing unit

FIG. 7

Communication apparatus

Processor

Bus

Memory

Communication
interface

FIG. 8

## INTERNATIONAL SEARCH REPORT

| International application No. |
|---|
| **PCT/CN2023/100036** |

**A. CLASSIFICATION OF SUBJECT MATTER**

H04J 13/10(2011.01)i

According to International Patent Classification (IPC) or to both national classification and IPC

**B. FIELDS SEARCHED**

Minimum documentation searched (classification system followed by classification symbols)

IPC: H04J, H04W, H04L

Documentation searched other than minimum documentation to the extent that such documents are included in the fields searched

Electronic data base consulted during the international search (name of data base and, where practicable, search terms used)

CNTXT, ENTXT, DWPI, CNKI: 三次, 三阶, 指数, 对数, 方, 幂, 系数, 多项式, 序列, three order, exponent, logarithm, square, power, coefficient, polynomial, sequence

**C. DOCUMENTS CONSIDERED TO BE RELEVANT**

| Category* | Citation of document, with indication, where appropriate, of the relevant passages | Relevant to claim No. |
|---|---|---|
| X | CN 112119671 A (HUAWEI TECHNOLOGIES CO., LTD.) 22 December 2020 (2020-12-22) description, paragraphs 71, 94-95, 131-151 and 200-201 | 1-3, 13, 15-20 |
| A | CN 112119671 A (HUAWEI TECHNOLOGIES CO., LTD.) 22 December 2020 (2020-12-22) description, paragraphs 71, 94-95, 131-151 and 200-201 | 4-14, 16-20 |
| A | CN 102484577 A (PANTECH CO., LTD.) 30 May 2012 (2012-05-30) entire document | 1-20 |
| A | CN 108811077 A (CHINA ACADEMY OF TELECOMMUNICATIONS TECHNOLOGY) 13 November 2018 (2018-11-13) entire document | 1-20 |
| A | WO 2022042618 A1 (HUAWEI TECHNOLOGIES CO., LTD.) 03 March 2022 (2022-03-03) entire document | 1-20 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 December 2023** | **12 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/100036**

| Patent document cited in search report | | | Publication date (day/month/year) | Patent family member(s) | | | Publication date (day/month/year) |
|---|---|---|---|---|---|---|---|
| CN | 112119671 | A | 22 December 2020 | WO | 2019223857 | A1 | 28 November 2019 |
| | | | | EP | 3782414 | A1 | 24 February 2021 |
| | | | | US | 2021076425 | A1 | 11 March 2021 |
| CN | 102484577 | A | 30 May 2012 | KR | 20110006199 | A | 20 January 2011 |
| | | | | JP | 2012533260 | A | 20 December 2012 |
| | | | | EP | 2456117 | A2 | 23 May 2012 |
| | | | | US | 2012117135 | A1 | 10 May 2012 |
| | | | | WO | 2011008003 | A2 | 20 January 2011 |
| CN | 108811077 | A | 13 November 2018 | TW | 201844036 | A | 16 December 2018 |
| | | | | WO | 2018201894 | A1 | 08 November 2018 |
| WO | 2022042618 | A1 | 03 March 2022 | CN | 114124326 | A | 01 March 2022 |

Form PCT/ISA/210 (patent family annex) (July 2022)